# EUROPEAN PATENT APPLICATION

(11) **EP 4 832 073 A1**
(43) Date of publication of application: **28.10.2026**
(21) Application number: 25858410.1
(22) Date of filing: 06.05.2025
(51) Int. Cl.: H01M 4/133, H01M 4/587, H01M 4/13

(54) **SECONDARY BATTERY AND ELECTRIC DEVICE**

(30) Priority: 30.08.2024 CN 202411214805
(71) Applicant: Contemporary Amperex Technology Co., Limited, Ningde, Fujian 352100 (CN)
(72) Inventor: LIN, Xieji, Ningde, Fujian 352100 (CN); LI, Yuanyuan, Ningde, Fujian 352100 (CN); ZENG, Qinqin, Ningde, Fujian 352100 (CN); SHEN, Rui, Ningde, Fujian 352100 (CN); HE, Libing, Ningde, Fujian 352100 (CN); LIU, Na, Ningde, Fujian 352100 (CN)
(74) Representative: Lorenz Seidler Gossel Part. mbB
(86) International application number: PCT/CN2025/092879
(87) International publication number: WO 2026/045360

(57) **Abstract**

Provided in the present disclosure is a secondary battery comprising a negative electrode sheet, wherein the negative electrode sheet comprises a negative electrode current collector and a negative electrode film layer disposed on at least one surface of the negative electrode current collector. The negative electrode film layer is provided with a first surface away from the negative electrode current collector and a second surface arranged opposite to the first surface, the thickness of the negative electrode film layer is marked as H. A region with in a thickness range from the first surface to 0.3 H of the negative electrode film layer is marked as the first region of the negative electrode film layer, and a region within a thickness range from the second surface to 0.3 H of the negative electrode film layer is marked as the second region of the negative electrode film layer. The first region comprises a first negative electrode active material, and the second region comprises a second negative electrode active material. The first negative electrode active material comprises primary particles of first artificial graphite, the first negative electrode active material has a powder OI value of 3-6, a graphitization degree of 91-93.5%. The second negative electrode active material has a capacity per gram greater than that of the first negative electrode active material.

## Description

### CROSS-REFERENCE TO RELATED APPLICATIONS

This disclosure is based on and claims the priority to the Chinese Patent Application No. 202411214805.6, filed on August 30, 2024, and entitled "SECONDARY BATTERY AND ELECTRIC DEVICE", which is incorporated herein by reference in its entirety.

### TECHNICAL FIELD

This disclosure relates to the field of battery technology, and in particular, to a secondary battery and an electric device.

### BACKGROUND

In recent years, as secondary batteries have become increasingly widely used, they have found broad application in energy storage power systems such as hydropower, thermal power, wind power, and solar power stations, as well as in various fields such as electric tools, electric bicycles, electric motorcycles, electric vehicles, and aerospace. Due to the great development achieved by secondary batteries, higher requirements are also imposed on their energy density and cycling performance.

### SUMMARY

This disclosure is made in view of the above problems, and its object is to provide a secondary battery and an electric device. The secondary battery of this disclosure can improve cycling performance while ensuring an energy density.

To achieve the above object, this disclosure provides a secondary battery, including a negative electrode sheet, where the negative electrode sheet includes a negative electrode current collector and a negative electrode film layer on at least one surface of the negative electrode current collector, the negative electrode film layer is provided with a first surface away from the negative electrode current collector and a second surface disposed opposite to the first surface, a thickness of the negative electrode film layer is denoted as H, a region within a thickness range from the first surface of the negative electrode film layer to 0.3H is denoted as a first region of the negative electrode film layer, a region within a thickness range from the second surface of the negative electrode film layer to 0.3H is denoted as a second region of the negative electrode film layer, the first region includes a first negative electrode active material, and the second region includes a second negative electrode active material; the first negative electrode active material includes primary particles of first artificial graphite, a powder OI value of the first negative electrode active material is 3 to 6, and a graphitization degree is 91% to 93.5%; and a specific capacity of the second negative electrode active material is greater than a specific capacity of the first negative electrode active material. The negative electrode film layer includes two layers, where the first region is provided with the first negative electrode active material, and the second region is provided with the second negative electrode active material, which improves cycling performance of the secondary battery while ensuring the energy density.

In some embodiments, the powder OI value of the first negative electrode active material is 3 to 3.8, and/or the graphitization degree is 91.0% to 92.5%. This improves structural stability of an SEI film and prolongs a cycle life of a secondary battery.

In some embodiments, an I_{D}/I_{G} value of the first negative electrode active material is 0.08 to 0.17; where I_{D} represents a D peak intensity at 1350±50 cm⁻¹ in a Raman spectrum of a material, I_{G} represents a G peak intensity at 1580±50 cm⁻¹ in a Raman spectrum of a material, and the I_{D}/I_{G} value represents a ratio of the D peak intensity to the G peak intensity. This helps reduce defects in the first negative electrode active material at the negative electrode and reduce the consumption of active lithium in the cycling and storage process, thereby prolonging the life of the secondary battery.

In some embodiments, the I_{D}/I_{G} value of the first negative electrode active material is 0.1 to 0.15.

In some embodiments, the specific capacity of the second negative electrode active material is 359 mAh/g or more. This helps improve the specific capacity of the negative electrode film layer and improve the energy density of the secondary battery.

In some embodiments, the specific capacity of the first negative electrode active material is 335 mAh/g to 350 mAh/g. This helps improve cycling performance of the secondary battery while ensuring energy density.

In some embodiments, the specific capacity of the first negative electrode active material is 335 mAh/g to 345 mAh/g; and/or the specific capacity of the second negative electrode active material is 360 mAh/g to 366 mAh/g. This helps improve the cycling performance of the secondary battery while ensuring the energy density.

In some embodiments, a powder compacted density of the first negative electrode active material under 50000 N is less than a powder compacted density of the second negative electrode active material under 50000 N. This helps improve the kinetic performance and cycling performance of the secondary battery while ensuring the energy density of the secondary battery.

In some embodiments, the powder compacted density of the first negative electrode active material under 50000 N is 1.65 g/cc to 1.83 g/cc; and/or the powder compacted density of the second negative electrode active material under 50000 N pressure is 1.95 g/cc to 2.04 g/cc. This helps reduce volume swelling during cycling of the secondary battery, thereby prolonging the life of the secondary battery while ensuring the energy density of the secondary battery.

In some embodiments, the powder compacted density of the first negative electrode active material under 50000 N is 1.65 g/cc to 1.71 g/cc; and/or the powder compacted density of the second negative electrode active material under 50000 N pressure is 1.96 g/cc to 2.02 g/cc.

In some embodiments, the graphitization degree of the first negative electrode active material is less than a graphitization degree of the second negative electrode active material. This improves cycling performance of the secondary battery while ensuring the energy density.

In some embodiments, the graphitization degree of the second negative electrode active material is 94.0% to 96.0%. This helps improve the energy density of the secondary battery.

In some embodiments, the graphitization degree of the second negative electrode active material is 94.2% to 95.8%.

In some embodiments, a volume-based distribution particle size Dᵥ50 of the first negative electrode active material is 9.0 µm to 13.5 µm; and/or a volume-based distribution particle size Dᵥ50 of the second negative electrode active material is 14.5 µm to 18.0 µm.

In some embodiments, the volume-based distribution particle size Dᵥ50 of the first negative electrode active material is 12.5 µm to 13.5 µm; and/or the volume-based distribution particle size Dᵥ50 of the second negative electrode active material is 15.0 µm to 17.5 µm.

In some embodiments, a specific surface area of the first negative electrode active material is less than or equal to a specific surface area of the second negative electrode active material.

In some embodiments, the specific surface area of the first negative electrode active material is 0.8 m²/g to 1.8 m²/g; and/or the specific surface area of the second negative electrode active material is 0.8 m²/g to 2.1 m²/g. This helps reduce the side reaction activity on the surface of the negative electrode active material, thereby reducing the consumption of active ions by SEI film formation, improving cycling performance and the initial Coulombic efficiency of the secondary battery.

In some embodiments, a specific capacity of the negative electrode sheet is 348.0 mAh/g to 355.0 mAh/g. This ensures the energy density of the secondary battery.

In some embodiments, a powder compacted density of the negative electrode film layer under 50000 N pressure is 1.60 g/cc to 1.70 g/cc. This helps improve kinetic performance and prolong the life of the negative electrode film layer while ensuring the energy density.

In some embodiments, an areal density of the negative electrode film layer is 10.0 mg/cm² to 20.0 mg/cm². This helps ensure the energy density of the secondary battery as well as good storage performance and kinetic performance.

In some embodiments, a thickness of the negative electrode film layer is 70 µm to 250 µm. This helps the secondary battery achieve good storage performance and kinetic performance while ensuring the energy density.

In some embodiments, in the negative electrode film layer, a mass ratio of the first negative electrode active material to the second negative electrode active material is 3:7 to 6:4. This helps improve the cycling performance of the secondary battery while ensuring the energy density.

In some embodiments, the second negative electrode active material includes second artificial graphite, La(110) of the second artificial graphite is 130 nm to 175 nm, and Lc(002) is 30 nm to 42 nm; and La(110) represents a crystallite size along an a-axis in a (110) crystal plane of a material, and Lc(002) represents a crystallite size along a c-axis in a (002) crystal plane of a material. This helps the secondary battery achieve a high energy density.

In some embodiments, the La(110) of the second artificial graphite is 132 nm to 172 nm, and Lc(002) is 30 nm to 36 nm. This helps the secondary battery achieve a high energy density.

In some embodiments, La(110)/Lc(002) is 3.5 to 5.5. This helps the secondary battery achieve a high energy density.

In some embodiments, under conditions of delithiation rate of 0.1C and lithiation rate of 0.05C, a button cell prepared from the second artificial graphite is subjected to a charge-discharge test to obtain a charge-discharge curve in a range of 0.005 V to 2.0 V; and a discharge curve exhibits a lithiation plateau in a voltage range of 0.005 V to 0.070 V, and a proportion X of a discharge capacity corresponding to the lithiation plateau to a total discharge capacity of the button cell is 43% or more. This helps improve the energy density of the secondary battery.

In some embodiments, the proportion X of the discharge capacity corresponding to the lithiation plateau to the total discharge capacity of the button cell is 43% to 47%.

In some embodiments, the second artificial graphite includes secondary particles. This helps reduce the volume swelling of the second artificial graphite, thereby prolonging the cycle life of the secondary battery.

In some embodiments, a particle size distribution (Dᵥ90-Dᵥ10)/Dᵥ50 of the second negative electrode active material is 0.9 to 1.25. This helps improve the transport performance of active ions and electrons in the negative electrode film layer, thereby improving the kinetic performance of the secondary battery.

According to a second aspect of this disclosure, an electric device is provided, including the secondary battery in the first aspect of this disclosure. Since the electric device of this disclosure includes the secondary battery provided by this disclosure, it at least has the same advantages as the secondary battery.

### BRIEF DESCRIPTION OF DRAWINGS

FIG. 1 is a schematic diagram of a negative electrode sheet according to an embodiment of this disclosure.
FIG. 2 is a schematic diagram of a battery cell according to an embodiment of this disclosure.
FIG. 3 is an exploded view of the battery cell shown in FIG. 2 according to an embodiment of this disclosure.
FIG. 4 is a schematic diagram of a battery module according to an embodiment of this disclosure.
FIG. 5 is a schematic diagram of a battery pack according to an embodiment of this disclosure.
FIG. 6 is an exploded view of the battery pack shown in FIG. 5 according to an embodiment of this disclosure.
FIG. 7 is a schematic diagram of an electric device using a secondary battery of this disclosure as a power source.

### Reference sign description:

1. battery pack; 2. upper case; 3. lower case; 4. battery module; 5. battery cell; 51. case; 52. electrode assembly; 53. top cover assembly; 10. negative electrode sheet; 101. negative electrode current collector; 102. negative electrode film layer; 102a. first surface; 102b. second surface; 1021. first region; 1022. second region; and 1023. intermediate region.

### DESCRIPTION OF EMBODIMENTS

Hereinafter, embodiments of a negative electrode sheet, a secondary battery, and an electrical apparatus of this disclosure are described in detail with appropriate reference to the accompanying drawings. However, there may be cases where unnecessary detailed descriptions are omitted. For example, there may be omissions of detailed descriptions of well-known matters and repeated descriptions of actually identical structures. This is to avoid unnecessarily lengthening the following descriptions and to facilitate understanding by those skilled in the art. In addition, the accompanying drawings and the following descriptions are provided to enable those skilled in the art to fully understand this disclosure and are not intended to limit the subject matter described in the claims.

The "range" disclosed in this disclosure is defined in the form of a lower limit and an upper limit, and the given range is defined by one lower limit and one upper limit, and the selected lower limit and upper limit define the boundaries of a specific range. The range defined in this manner may include or exclude endpoints, and any combination thereof may be made, that is, any lower limit may be combined with any upper limit to form a range. For example, if ranges of 60 to 120 and 80 to 110 are listed for a specific parameter, it is also contemplated that ranges of 60 to 110 and 80 to 120 are understood. In addition, if the minimum range values listed are 1 and 2, and if the maximum range values listed are 3, 4, and 5, then the following ranges can all be contemplated: 1 to 3, 1 to 4, 1 to 5, 2 to 3, 2 to 4, and 2 to 5. In this disclosure, unless otherwise specified, the numerical range "a to b" represents an abbreviated representation of any real number combination between a and b, where a and b are both real numbers. For example, the numerical range "0 to 5" means that all real numbers from 0 to 5 have been fully listed in this text, and "0 to 5" is just an abbreviated representation of these numerical combinations. In addition, when a certain parameter is expressed as an integer greater than or equal to 2, it is equivalent to disclosing that the parameter is, for example, the integer 2, 3, 4, 5, 6, 7, 8, 9, 10, 11, 12, or the like.

Unless otherwise specified, all embodiments and optional embodiments of this disclosure can be combined with each other to form a new technical solution.

Unless otherwise specified, all technical features and optional technical features of this disclosure can be combined with each other to form a new technical solution.

Unless otherwise specified, the terms used in this disclosure have the commonly understood meanings to those skilled in the art.

Unless otherwise specified, the values of various parameters mentioned in this disclosure can be measured by various commonly used test methods in the art, for example, can be measured according to the test methods given in this disclosure.

Unless otherwise specified, in this disclosure, the term "active ions" refers to ions that can be intercalated and deintercalated between positive and negative electrodes of a secondary battery, including but not limited to lithium ions.

Currently, to increase an energy density of secondary batteries, graphite materials with high specific capacity and high compacted density are usually used, such as natural graphite. However, the interlayer spacing of graphite with a high specific capacity is small, which affects the kinetic performance of the battery, and the graphite structure is unstable due to volume swelling during cycling, which seriously affects the cycling performance of the secondary battery. In addition, to improve the cycling performance of secondary batteries, graphite materials with low graphitization degree and large interlayer spacing are usually used, but low graphitization degree leads to deterioration of the specific capacity and compacted density of the graphite material, affecting the energy density of the battery. Therefore, it is currently difficult to improve cycling performance while ensuring the energy density.

Based on this, this disclosure proposes a secondary battery and an electric device, thereby enabling the secondary battery to improve cycling performance while ensuring an energy density.

This disclosure provides a secondary battery. The term "secondary battery" mentioned in this text refers to a battery cell, a battery module, or a battery pack, which are separately described below.

The secondary battery cell includes a positive electrode sheet, a negative electrode sheet, an electrolyte, and a separator. During the charge and discharge of the battery, active ions are intercalated and deintercalated between the positive electrode sheet and the negative electrode sheet. The electrolyte conducts ions between the positive electrode sheet and the negative electrode sheet. The separator is disposed between the positive electrode sheet and the negative electrode sheet, mainly configured to prevent short circuit between the positive and negative electrodes while allowing ions to pass through.

### Negative electrode sheet

The secondary battery in this disclosure includes a negative electrode sheet. The negative electrode sheet includes a negative electrode current collector and a negative electrode film layer on at least one surface of the negative electrode current collector, the negative electrode film layer is provided with a first surface away from the negative electrode current collector and a second surface disposed opposite to the first surface, a thickness of the negative electrode film layer is denoted as H, a region within a thickness range from the first surface of the negative electrode film layer to 0.3H is denoted as a first region of the negative electrode film layer, a region within a thickness range from the second surface of the negative electrode film layer to 0.3H is denoted as a second region of the negative electrode film layer, the first region includes a first negative electrode active material, the second region includes a second negative electrode active material, the first negative electrode active material includes primary particles of a first artificial graphite, the first negative electrode active material has a powder OI value of 3 to 6 and a graphitization degree of 91% to 93.5%, and a specific capacity of the second negative electrode active material is greater than a specific capacity of the first negative electrode active material.

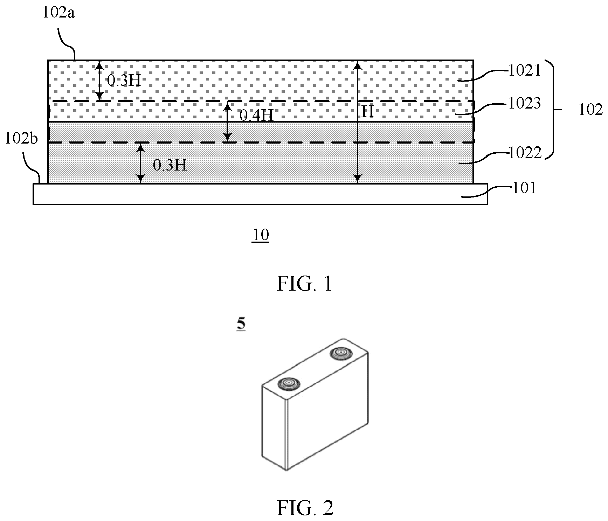

Refer to FIG. 1, which is a schematic diagram of an embodiment of a negative electrode sheet of this disclosure. As shown in FIG. 1, the negative electrode sheet 10 includes a negative electrode current collector 101 and a negative electrode film layer 102 formed on at least one surface of the negative electrode current collector 101, the negative electrode film layer 102 is provided with a first surface 102a away from the negative electrode current collector 101 and a second surface 102b disposed opposite to the first surface 102a, and a thickness of the negative electrode film layer 102 is denoted as H. The thickness H of the negative electrode film layer refers to a thickness of the negative electrode film layer on one side of the negative electrode current collector. A region of the negative electrode film layer within a thickness range from the first surface 102a to 0.3H is denoted as a first region 1021 (upper layer) of the negative electrode film layer. A region of the negative electrode film layer within a thickness range from the second surface 102b to 0.3H is denoted as a second region 1022 (lower layer) of the negative electrode film layer. The first region 1021 includes a first negative electrode active material, and the second region 1022 includes a second negative electrode active material. The region between the first region 1021 and the second region 1022 is denoted as an intermediate region 1023. It is easily understood that within the range of the intermediate region 1023, it may contain only the first negative electrode active material, only the second negative electrode active material, both the first negative electrode active material and the second negative electrode active material, or other known negative electrode active materials in the art rather than the first negative electrode active material and the second negative electrode active material of this disclosure.

It should be understood that in the embodiment shown in FIG. 1, the second surface 102b is in contact with an upper surface of the negative electrode current collector 101, but a structure of the negative electrode sheet of this disclosure is not limited thereto. For example, there may be an additional layer between the negative electrode film layer 102 and the negative electrode current collector 101. In this case, the second surface 102b does not directly contact the negative electrode current collector 101.

It should also be understood that although clear boundaries between regions are shown in FIG. 1, such clear interfaces may not exist in the product.

In this disclosure, the negative electrode film layer includes two layers, so that the negative electrode sheet can still maintain a good pore structure and low tortuosity at a relatively high compacted density, maintaining a relatively short ion transport path and a relatively high ionic conductivity. In addition, graphite with a low graphitization degree and a high isotropy is provided on the side away from the current collector (that is, the first region 1021), volume swelling in a delithiation process can be effectively reduced, thereby improving cycling performance. Providing the second negative electrode active material with a relatively high specific capacity on the side close to the current collector (that is, the second region 1022), the energy density of the battery can be ensured.

In this disclosure, the first negative electrode active material included in the first region includes primary particles of a first artificial graphite, and the first negative electrode active material has the powder OI value of 3 to 6 and the graphitization degree of 91% to 93.5%. The inventors have found through research that since the above first negative electrode active material with a relatively low graphitization degree is provided in the first region, the graphite material has a relatively large interlayer spacing, therefore the volume swelling during lithiation and delithiation is small, which improves the structural stability of the SEI film and prolongs a cycle life; in addition, since the graphite material has a relatively high degree of isotropy, the volume swelling caused by lithiation and delithiation can be effectively alleviated, further improving the stability of the SEI film and prolonging the cycle life. In addition, primary particles help reduce surface defects of graphite and reduce the consumption of active ions during the cycling of the secondary battery, thereby prolonging the cycle life of the secondary battery.

For example, the powder OI value of the first negative electrode active material may be 3, 4, 5, or 6, or a value between any two of these values. For example, the graphitization degree of the first negative electrode active material may be 91%, 91.5%, 92.0%, 92.5%, 93.0%, or 93.5%, or a value between any two of these values. In some optional embodiments, the powder OI value of the first negative electrode active material is 3 to 3.8, and/or the graphitization degree is 91.0% to 92.5%.

In this disclosure, the specific capacity of the second negative electrode active material is greater than the specific capacity of the first negative electrode active material. In this disclosure, the second negative electrode active material located in the second region has a relatively high specific capacity, which helps improve the specific capacity of the negative electrode film layer, thereby ensuring the energy density of the secondary battery; and the first negative electrode active material located in the first region can improve cycling performance.

In some embodiments, an I_{D}/I_{G} value of the first negative electrode active material is 0.08 to 0.17; where I_{D} represents a D peak intensity at 1350±50 cm⁻¹ in a Raman spectrum of a material, I_{G} represents a G peak intensity at 1580±50 cm⁻¹ in a Raman spectrum of a material, and the I_{D}/I_{G} value represents a ratio of the D peak intensity to the G peak intensity. Setting the I_{D}/I_{G} value of the first negative electrode active material to be in the above range helps reduce defects in the first negative electrode active material and reduce the consumption of active lithium in the cycling and storage process, thereby prolonging the life. For example, the I_{D}/I_{G} value of the first negative electrode active material may be 0.08, 0.09, 0.10, 0.11, 0.12, 0.13, 0.14, 0.15, 0.16, or 0.17, or a value between any two of these values. In some optional embodiments, the I_{D}/I_{G} value of the first negative electrode active material is 0.1 to 0.15.

In some embodiments, the specific capacity of the first negative electrode active material is 335 mAh/g to 350 mAh/g. Setting the specific capacity of the first negative electrode active material to be in the above range helps the secondary battery achieve good cycling performance while ensuring the energy density. For example, the specific capacity of the first negative electrode active material may be 335 mAh/g, 340 mAh/g, 345 mAh/g, or 350 mAh/g, or a value between any two of these values. In some optional embodiments, the specific capacity of the first negative electrode active material may be 335 mAh/g to 345 mAh/g.

In some embodiments, the specific capacity of the second negative electrode active material is 359.0 mAh/g or more. The high specific capacity of the negative electrode active material in the second region helps improve the energy density of the secondary battery. For example, the specific capacity of the second negative electrode active material is 359 mAh/g, 360 mAh/g, 361 mAh/g, 362 mAh/g, 363 mAh/g, 364 mAh/g, 365 mAh/g, 366 mAh/g, 367 mAh/g, 368 mAh/g, 369 mAh/g, or 370 mAh/g, or a value between any two of these values. In some optional embodiments, the specific capacity of the second negative electrode active material is 360 mAh/g to 366 mAh/g. Setting the specific capacity of the second negative electrode active material to be in the above range helps improve the energy density of the secondary battery.

In some embodiments, a powder compacted density of the first negative electrode active material under 50000 N is less than the powder compacted density of the second negative electrode active material under 50000 N. In this disclosure, the second negative electrode active material located in the second region has a higher powder compacted density, helping improve the energy density of the secondary battery; and the first negative electrode active material located in the first region has a lower powder compacted density, helping reduce the tortuosity of the negative electrode film layer and reduce a migration path of active ions, thereby improving the kinetic performance and cycling performance of the secondary battery.

In some embodiments, the powder compacted density of the first negative electrode active material under 50000 N is 1.65 g/cc to 1.83 g/cc; and/or the powder compacted density of the second negative electrode active material under 50000 N pressure is 1.95 g/cc to 2.04 g/cc. Setting the powder compacted density of the first negative electrode active material to be in the above range helps reduce volume swelling during cycling of the secondary battery, thereby prolonging the life of the secondary battery; in addition, setting the powder compacted density of the second negative electrode active material to be in the above range helps improve the energy density of the secondary battery. For example, the powder compacted density of the first negative electrode active material under 50000 N may be 1.65 g/cc, 1.68 g/cc, 1.70 g/cc, 1.72 g/cc, 1.75 g/cc, 1.78 g/cc, 1.80 g/cc, or 1.83 g/cc, or a value between any two of these values. In some optional embodiments, the powder compacted density of the first negative electrode active material under 50000 N is 1.65 g/cc to 1.71 g/cc. For example, the powder compacted density of the second negative electrode active material under 50000 N pressure may be 1.95 g/cc, 1.96 g/cc, 1.97 g/cc, 1.98 g/cc, 1.99 g/cc, 2.00 g/cc, 2.01 g/cc, 2.02 g/cc, 2.03 g/cc, or 2.04 g/cc, or a value between any two of these values. In some optional embodiments, the powder compacted density of the second negative electrode active material under 50000 N pressure is 1.96 g/cc to 2.02 g/cc.

In some embodiments, the graphitization degree of the first negative electrode active material is less than the graphitization degree of the second negative electrode active material. In this disclosure, since the first negative electrode active material located in the first region has a lower graphitization degree, the interlayer spacing of the first negative electrode active material is larger, helping reduce volume swelling during the cycling of the secondary battery and improve the cycling performance of the secondary battery; in addition, the second negative electrode active material located in the second region has a higher graphitization degree, helping improve the specific capacity of the negative electrode film layer, thereby improving the energy density of the secondary battery. As a result, the secondary battery can achieve excellent cycling performance and a high energy density.

In some embodiments, the graphitization degree of the second negative electrode active material is 94.0% to 96.0%. Setting the graphitization degree of the second negative electrode active material to be in the above range helps the second negative electrode active material achieve a high compacted density and specific capacity, thereby improving the energy density of the secondary battery. For example, the graphitization degree of the second negative electrode active material may be 94.0%, 94.5%, 95.0%, 95.5%, or 96.0%, or a value between any two of these values. In some optional embodiments, the graphitization degree of the second negative electrode active material is 94.2% to 95.8%.

In some embodiments, the volume-based distribution particle size Dᵥ50 of the first negative electrode active material is 9.0 µm to 13.5 µm; and/or the volume-based distribution particle size Dᵥ50 of the second negative electrode active material is 14.5 µm to 18.0 µm. Setting the volume-based distribution particle size Dᵥ50 of the first negative electrode active material and/or the second negative electrode active material to be in the above range helps improve the cycling performance and kinetic performance of the secondary battery while ensuring the energy density. For example, the volume-based distribution particle size Dᵥ50 of the first negative electrode active material may be 9.0 µm, 9.5 µm, 10.0 µm, 10.5 µm, 11.0 µm, 11.5 µm, 12.0 µm, 12.5 µm, 13.0 µm, or 13.5 µm, or a value between any two of these values. In some optional embodiments, the volume-based distribution particle size Dᵥ50 of the first negative electrode active material is 12.5 µm to 13.5 µm. In addition, for example, the volume-based distribution particle size Dᵥ50 of the second negative electrode active material may be 14.5 µm, 15.0 µm, 15.5 µm, 16.0 µm, 16.5 µm, 17.0 µm, 17.5 µm, or 18.0 µm, or a value between any two of these values. In some optional embodiments, the volume-based distribution particle size Dᵥ50 of the second negative electrode active material is 15.0 µm to 17.5 µm.

In some embodiments, the specific surface area of the first negative electrode active material is less than or equal to the specific surface area of the second negative electrode active material.

In some embodiments, the specific surface area of the first negative electrode active material is 0.8 m²/g to 1.8 m²/g; and/or the specific surface area of the second negative electrode active material is 0.8 m²/g to 2.1 m²/g. Setting the specific surface area of the first negative electrode active material to be in the above range helps reduce the side reaction activity on a surface of the negative electrode active material, thereby reducing the consumption of active ions by SEI film formation and improving the cycling performance of the secondary battery. In addition, setting the specific surface area of the second negative electrode active material to be in the above range helps reduce the side reaction activity on the surface of the negative electrode active material, thereby reducing the consumption of active ions by SEI film formation, improving the initial Coulombic efficiency and cycling performance of the secondary battery; further, relatively high active ion transport performance can be achieved, improving the kinetic performance of the secondary battery. For example, the specific surface area of the first negative electrode active material may be 0.8 m²/g, 1.0 m²/g, 1.2 m²/g, 1.4 m²/g, 1.6 m²/g, or 1.8 m²/g, or a value between any two of these values. For example, the specific surface area of the second negative electrode active material may be 0.8 m²/g, 1.0 m²/g, 1.2 m²/g, 1.4 m²/g, 1.6 m²/g, 1.8 m²/g, 2.0 m²/g, or 2.1 m²/g, or a value between any two of these values.

In some embodiments, the specific capacity of the negative electrode sheet is 348.0 mAh/g to 355.0 mAh/g. Setting the specific capacity of the negative electrode sheet to be in the above range helps improve the energy density of the secondary battery. For example, the specific capacity of the negative electrode sheet may be 348.0 mAh/g, 350.0 mAh/g, 352.0 mAh/g, or 355.0 mAh/g, or a value between any two of these values.

In some embodiments, the powder compacted density of the negative electrode film layer under 50000 N pressure is 1.60 g/cc to 1.70 g/cc. Setting the powder compacted density of the negative electrode film layer to be in the above range helps maintain a good pore structure and reduce the tortuosity of the negative electrode film layer, shortening the active ion transport path, thereby improving the kinetic performance and prolonging the life of the negative electrode film layer while ensuring the high energy density. For example, the powder compacted density of the negative electrode film layer under 50000 N pressure may be 1.60 g/cc, 1.62 g/cc, 1.64 g/cc, 1.66 g/cc, 1.68 g/cc, or 1.70 g/cc, or a value between any two of these values. In some optional embodiments, the powder compacted density of the negative electrode film layer under 50000 N pressure is 1.62 g/cm³ to 1.68 g/cm³.

In some embodiments, an areal density of the negative electrode film layer is 10.0 mg/cm² to 20.0 mg/cm². Setting the areal density of the negative electrode film layer to be in the above range helps the negative electrode film layer achieve a high capacity and high active ion and electron transport performance, thereby helping the secondary battery achieve the high energy density as well as good storage performance and kinetic performance. For example, the areal density of the negative electrode film layer may be 10 mg/cm², 12.0 mg/cm², 15 mg/cm², 18.0 mg/cm², or 20 mg/cm², or a value between any two of these values. In some optional embodiments, the areal density of the negative electrode film layer is 12.0 mg/cm² to 18.5 mg/cm².

In some embodiments, the thickness of the negative electrode film layer is 70 µm to 250 µm. Setting the thickness of the negative electrode film layer in the above range helps the negative electrode film layer to achieve a high capacity and high active ion and electron transport performance, thereby helping the secondary battery to achieve a high energy density and good storage performance and kinetic performance. For example, the thickness of the negative electrode film layer may be 70 µm, 80 µm, 90 µm, 95 µm, 100 µm, 110 µm, 120 µm, 130 µm, 140 µm, 150 µm, 160 µm, 180 µm, 200 µm, 210 µm, 220 µm, 240 µm, or 250 µm, or a value between any two of these values. In some optional embodiments, the thickness of the negative electrode film layer is 90 µm to 220 µm.

In some embodiments, in the negative electrode film layer, a mass ratio of the first negative electrode active material to the second negative electrode active material is 3:7 to 6:4. Setting the mass ratio of the first negative electrode active material to the second negative electrode active material to be in the above range helps the secondary battery to achieve excellent cycling performance while ensuring the energy density. For example, the mass ratio of the first negative electrode active material to the second negative electrode active material may be 3:7, 4:6, 5:5, or 6:4, or a ratio between any two of these values.

In some embodiments, the second negative electrode active material includes second artificial graphite, La(110) of the second artificial graphite is 130 nm to 175 nm, and Lc(002) is 30 nm to 42 nm, where La(110) represents a crystallite size along an a-axis in a (110) crystal plane of a material, and Lc(002) may represent a crystallite size along a c-axis in a (002) crystal plane of a material. Increase in La of the second artificial graphite indicates increase of the crystallite size of the second artificial graphite and increase of lithiation sites on a surface of the second artificial graphite, leading to increase of the specific capacity. In addition, the increase of the crystallite size can also reduce crystallite boundaries of the second artificial graphite, leading to increase of lithiation sites, thereby reducing the adverse effects on specific capacity and powder compacted density, and further improving the specific capacity and powder compacted density of the second artificial graphite. Setting the Lc of the second artificial graphite to be in the above range helps reduce the stacking of graphite crystallites, thereby reducing grain boundaries between crystallites, helping increase the lithiation sites on the surface of the second artificial graphite, thereby improving the specific capacity of the second artificial graphite. As a result, the second negative electrode active material located in the second region has a high specific capacity and a high compacted density, helping the secondary battery to achieve a high energy density.

In some embodiments, the La(110) of the second artificial graphite is 132 nm to 172 nm, and Lc(002) is 30 nm to 36 nm. Setting the La(110) and Lc(002) of the second artificial graphite to be in the above range helps improve the specific capacity and compacted density of the second negative electrode active material, thereby helping the secondary battery achieve a high energy density.

In some embodiments, La(110)/Lc(002) is 3.5 to 5.5. Setting La(110)/Lc(002) to be in the above range leads to good grain development in the graphite material and a small quantity of crystallites, resulting in fewer interfaces between crystallites, which helps increase the lithiation sites on the surface of the artificial graphite, thereby helping improve the specific capacity of the negative electrode active material. This helps improve the specific capacity of the negative electrode film layer, thereby improving the energy density of the secondary battery. For example, La(110)/Lc(002) may be 3.5, 3.8, 4.0, 4.2, 4.4, 4.6, 4.8, 5.0, 5.2, or 5.5, or a value between any two of these values. In some optional embodiments, the La(110)/Lc(002) of the second artificial graphite is 4.5 to 5.5.

In some embodiments, under conditions of delithiation rate of 0.1C and lithiation rate of 0.05C, a button cell prepared from the second artificial graphite is subjected to a charge-discharge test to obtain a charge-discharge curve in a range of 0.005 V to 2.0 V. A discharge curve exhibits a lithiation plateau in a voltage range of 0.005 V to 0.070 V, and a proportion X of a discharge capacity corresponding to the lithiation plateau to a total discharge capacity of the button cell is 43% or more.

In this disclosure, the charge-discharge test is performed using the following method: mixing sample powder with a conductive agent carbon black (Super P) and a binder polyvinylidene fluoride (PVDF) in a mass ratio of 91.6:1.8:6.6 with a solvent N-methylpyrrolidone (NMP) uniformly to form a slurry; applying the prepared slurry to a surface of a negative electrode current collector copper foil, and performing drying in an oven; mixing ethylene carbonate (EC), ethyl methyl carbonate (EMC), and diethyl carbonate (DEC) in a volume ratio of 1:1:1 to obtain an organic solvent, and then dissolving LiPF₆ in the above organic solvent to prepare an electrolyte with a concentration of 1 mol/L; then using a metal lithium sheet as a counter electrode and a polyethylene (PE) film as a separator, to assemble a CR2430 button cell with the above electrolyte in an argon-protected glove box; after leaving the obtained button cell standing for 12 h, at 25° C, discharging the cell at a constant current of 0.05C to 0.005 V; then after leaving the cell standing for 10 minutes, discharging the cell at a constant current of 50 µA to 0.005 V; then leaving the cell standing for 10 minutes, discharging the cell at a constant current of 10 µA to 0.005 V; and charging the cell at a constant current of 0.1C to 2.0 V, and recording a charge-discharge curve of the material.

In this disclosure, the button cell prepared from the second negative electrode active material is subjected to the above charge-discharge test to obtain a charge-discharge curve. In the discharge curve, the proportion X of the discharge capacity corresponding to the lithiation plateau in the voltage range of 0.005 V to 0.070 V to the total discharge capacity of the button cell is 43% or more. The specific capacity of the second negative electrode active material is high, which helps improve the energy density of the secondary battery. Although the mechanism is not yet clear, the inventors believe that during the lithiation of the graphite material, as a lithium-ion intercalation amount increases, graphite intercalation compounds of different stages gradually form, such as LiC₂₄, LiC₁₂, LiC₆, and the like. The formation of graphite intercalation compounds of different stages corresponds to lithiation plateaus in different voltage ranges in the charge-discharge curve of the graphite material. Since the theoretical capacities of graphite intercalation compounds of different stages are different, for example, the theoretical capacity of LiC₆ is 372 mAh/g, while the theoretical specific capacity of LiC12 is 186 mAh/g, in the lithiation process, more formed LiC₆ (that is, corresponding to a lithiation plateau in the voltage range of 0.005 V to 0.07 V) means greater corresponding capacity contribution and a higher specific capacity of the graphite material. For example, the proportion X may be 43%, 44%, 45%, 46%, 47%, 48%, 49%, or 50%, or a value between any two of these values. In some embodiments, the proportion X of the discharge capacity corresponding to the lithiation plateau to the total discharge capacity of the button cell is 43% to 50%, optionally 43% to 47%.

In some embodiments, the second artificial graphite includes secondary particles. This helps reduce an orientation degree of the second artificial graphite, improve an isotropy degree of the second artificial graphite, reduce the volume swelling of the second artificial graphite, so as to help reduce damage to the SEI film caused by volume swelling and reduce the active ions consumed by formation of a new SEI film, thereby prolonging the cycle life of the secondary battery.

In some embodiments, the particle size distribution (Dᵥ90-Dᵥ10)/Dᵥ50 of the second negative electrode active material is 0.9 to 1.25. This helps improve the compacted density of the negative electrode film layer and improve the energy density of the secondary battery; in addition, this facilitates formation of a reasonable pore channel structure between particles of the negative electrode film layer, improving the transport performance of active ions and electrons in the negative electrode film layer, thereby improving the kinetic performance of the secondary battery. For example, the particle size distribution (Dᵥ90-Dv10)/Dv50 of the second negative electrode active material is 0.90, 0.95, 1.00, 1.05, 1.10, 1.15, 1.20, or 1.25, or a value between any two of these values. In some optional embodiments, the particle size distribution (Dᵥ90-Dᵥ10)/Dᵥ50 of the second negative electrode active material is 0.90 to 1.20.

In this disclosure, the La(110) and Lc(002) of the material (the second artificial graphite) can be measured using instruments and methods known in the art. For example, the negative electrode sheet detached from the secondary battery may be washed with an organic solvent such as DMC and then dried. Then, the washed negative electrode sheet is soaked in NMP for ultrasonic treatment to separate the copper foil and obtain the negative electrode material. The negative electrode material is dried and then calcined at 350°C to 500°C, washed multiple times with water, and dried at 80°C to obtain the negative electrode active material. An X-ray diffractometer (such as Bruker D8 Discover) is used for the test, and the test may be conducted with reference to JIS K 0131-1996 and JB/T 4220-2011, to obtain a peak intensity and full width at half maximum (FWHM) of a diffraction peak corresponding to the (110) crystal plane of the material, and a peak intensity and full width at half maximum (FWHM) of a diffraction peak corresponding to the (002) crystal plane, and then calculation is performed according to the Scherrer formula.

In this disclosure, I_{D}/I_{G} of the material (the first negative electrode active material, the second negative electrode active material, or the like) can be tested using a Raman spectrometer, where I_{D} represents a D peak intensity at 1350±50 cm⁻¹ in a Raman spectrum of the material, and I_{G} represents a G peak intensity at 1580±50 cm⁻¹ in a Raman spectrum of the material. The test conditions are as follows: an excitation wavelength of 532 nm, a grating of 600 lines, an objective of 50 times, an integration time of 10s, cumulative times of 3, and surface scan, to obtain D peak and G peak intensities of 100 points. I_{D}/I_{G} of the 100 points are calculated, the maximum 30 I_{D}/I_{G} values and the minimum 30 I_{D}/I_{G} values are removed, and an average of the remaining 40 points is I_{D}/I_{G} of the material. The test instrument may be Horiba LabRAM HR800 Raman spectrometer.

In this disclosure, the powder OI value of the material (the first negative electrode active material, the second negative electrode active material, or the like) refers to a graphite orientation degree of the material, describing the consistency of the orientation degree of crystals in graphite material particles. The powder OI value of the material is a ratio of a peak area of a (004) plane to a peak area of a (110) plane obtained by testing the material using X-ray diffraction XRD method. In this disclosure, the powder OI value of the material may be measured using instruments and methods known in the art. For example, an X-ray diffractometer (such as Bruker D8 Discover) may be used for test, and the test may be conducted with reference to JIS K 0131-1996 and JB/T 4220-2011, to obtain the X-ray diffraction pattern of the powder sample; and the powder OI value of the sample is calculated according to OI value=I₀₀₄/I₁₁₀, where I₀₀₄ is the integrated area of the diffraction peak of the 004 crystal plane of crystalline carbon in the powder sample, and I₁₁₀ is the integrated area of the diffraction peak of the 110 crystal plane of crystalline carbon in the powder sample. In the X-ray diffraction analysis test of this disclosure, a copper target may be used as an anode target, CuKα ray is a radiation source, a ray wavelength λ is 1.5418 Å, 2θ scanning range is 20° to 80°, and a scanning rate is 4°/min.

In this disclosure, the powder compacted density of the material (the first negative electrode active material, the second negative electrode active material, or the like) is a mass per unit volume of powder under specified conditions, and may be measured using instruments and methods known in the art. For example, reference may be made to GB/T 24533-2009, and an electronic pressure test machine (for example, a UTM7305 electronic pressure test machine) may be used for measurement. An exemplary test method is as follows: 1 g of sample powder is added to a mold with a bottom area of 1.327 cm², a pressure of 50000 N is applied, and the pressure is held for 30s and then is released for 10s; then recording and calculation are performed to obtain the powder compacted density of the material under 50000 N pressure.

In this disclosure, the volume-based distribution particle sizes Dᵥ10, Dᵥ50, and Dᵥ90 of the material (the first negative electrode active material, the second negative electrode active material, or the like) respectively represent particle sizes corresponding to cumulative volume-based distribution percentages of 10%, 50%, and 90% of the material, and may be measured using instruments and methods known in the art. For example, reference may be made to GB/T 19077-2016, and a laser particle size analyzer may be used for measurement. The test instrument may be a Mastersizer 3000 laser particle size analyzer from Malvern Instruments (Malvern, UK).

In this disclosure, the specific capacity of the material (the first negative electrode active material, the second negative electrode active material, or the like) is a ratio of an electrical capacity that the active material can release to a mass of the active material, and can be tested using methods known in the art. For example, a test method is as follows: mixing a sample powder with a conductive agent, a binder, and optionally other additives in a certain mass ratio with a solvent uniformly to form a slurry; applying the prepared slurry to a surface of a negative electrode current collector copper foil, and performing drying in an oven; dissolving a lithium salt in an organic solvent to prepare an electrolyte; then using a metal lithium sheet as a counter electrode, a polyethylene (PE) film as a separator, to assemble a CR2430 button cell with the above electrolyte in an argon-protected glove box; after leaving the obtained button cell standing for 12 h, at 25°C, discharging the cell at a constant current of 0.15 mA to 0.005 V; then after leaving the cell standing for 10 minutes, discharging the cell at a constant current of 50 µA to 0.005 V; after leaving the cell standing for 10 minutes, discharging the cell at a constant current of 10 µA to 0.005 V; and then charging the cell at a constant current of 0.3 mA to 2.0 V, and recording a first-circle charge capacity of the button cell. A ratio of the charge capacity to the sample mass is the specific capacity of the corresponding material (the first negative electrode active material, the second negative electrode active material, or the like).

In this disclosure, the graphitization degree of the material (the first negative electrode active material, the second negative electrode active material, or the like) is a proportion of the carbon element in the material existing in a form of graphite structure, and may be tested using instruments and methods known in the art. For example, an X-ray diffractometer (such as Bruker D8 Discover) may be used for test, and the test may be conducted with reference to JIS K 0131-1996 and JB/T 4220-2011, to obtain an average interlayer spacing d₀₀₂ of a C(002) crystal plane in a crystal structure of the material, and then the graphitization degree is calculated according to the formula g=(0.344-d₀₀₂)/(0.344-0.3354)×100%. In the above formula, d₀₀₂ is the average interlayer spacing of the C(002) crystal plane in the crystal structure of the material, measured in nanometers (nm).

In this disclosure, the thickness of the negative electrode film layer has the meaning known in the art, and may be tested using methods known in the art, such as using a micrometer (for example, Mitutoyo 293-100, with accuracy of 0.1 µm). The thickness range given in this disclosure is the thickness range of a negative electrode film layer on one side of the negative electrode current collector.

In this disclosure, the specific surface area of the material (the first negative electrode active material, the second negative electrode active material, or the like) is a total area per unit mass of the material, and may be measured using instruments and methods known in the art. For example, with reference to GB/T 19587-2017, the test method of specific surface area analysis based on nitrogen adsorption is used for the test, and the BET (Brunauer Emmett Teller) method is used for calculation. The test instrument may be a Tri-Star 3020 specific surface area and pore size analyzer from Micromeritics USA.

In this disclosure, primary particles and secondary particles both have meanings known in the art. Primary particles refer to non-agglomerated particles. Secondary particles refer to agglomerated particles formed by agglomeration of two or more primary particles. Primary particles and secondary particles may be distinguished based on scanning electron microscope (SEM) images.

### Preparation method of negative electrode sheet

The negative electrode sheet in this disclosure may be prepared in the following manner: providing a first slurry containing a first negative electrode active material and a second slurry containing a second negative electrode active material; applying the first slurry to the negative electrode current collector; applying the second slurry to the first slurry; and after drying and cold pressing, obtaining a negative electrode sheet.

The preparation method of the first negative electrode active material in this disclosure includes the following steps:
pretreatment step: crushing and shaping petroleum coke to obtain a shaped material with a volume-based distribution particle size Dᵥ50 of 10 µm to 14 µm; and
graphitization step: subjecting the above shaped material to a first graphitization treatment at 2400°C to 2800°C to obtain a first negative electrode active material.

In this disclosure, petroleum coke is used as a raw material. Petroleum coke has high isotropy; therefore, the prepared first negative electrode active material also has high isotropy, helping reduce volume swelling of the first negative electrode active material during delithiation and prolong a cycle life of a secondary battery. For example, the petroleum coke may be petroleum needle coke.

In this disclosure, a temperature of the first graphitization treatment is 2400°C to 2800°C. Since the graphitization temperature is set to be in the above range, the grain growth and development of the graphite material can be controlled, so that the prepared graphite material has a relatively large interlayer spacing, which can reduce volume swelling of the first negative electrode active material during cycling of the secondary battery and maintain structural stability, thereby prolonging the life of the secondary battery. For example, the temperature of the first graphitization treatment may be 2400°C, 2500°C, 2600°C, 2700°C, or 2800°C, or a value between any two of these values.

In this disclosure, the graphitization treatment time is 2 h to 48 h. For example, when the graphitization temperature is 2600°C, the graphitization time may be 2 h, 4 h, 8 h, 20 h, or 48 h, or a value between any two of these values.

In some embodiments, a sulfur element content in the petroleum coke is less than or equal to 0.6%, and a volatile component content is less than or equal to 15%. Herein, the volatile component refers to a volatile organic substance, for example, includes alkane, aromatic, lipid, and the like. When contents of the sulfur element and the volatile component in the first raw material are in the above ranges, in the graphitization process, the defects caused by the overflow of the sulfur element decreases, which helps reduce the defects of the first negative electrode active material and improve the stability of the material, thereby prolonging the cycle life of the secondary battery.

In some embodiments, before the graphitization step, pre-carbonizing the shaped material is further included. The pre-carbonization step helps reduce volatile components in the binder, thereby reducing impurities in the first negative electrode active material, improving the specific capacity and the compacted density of the first negative electrode active material, improving cycling performance while ensuring the energy density of the secondary battery.

In some embodiments, the pre-carbonization is performed under a protective atmosphere, for example, the protective atmosphere may be nitrogen or argon. In an optional embodiment, the pre-carbonization is performed under a nitrogen atmosphere.

In some embodiments, the pre-carbonization temperature is 1000°C to 1500°C. For example, the pre-carbonization temperature may be 1000°C, 1100°C, 1200°C, 1300°C, 1400°C, or 1500°C, or a value between any two of these values. Since the pre-carbonization temperature is set to be in the above range, the volatile component contained in the raw material can be fully removed, helping reduce impurities and defects in the artificial graphite, thereby improving the specific capacity of the artificial graphite. In addition, the pre-carbonization treatment can increase a density of the raw material, and increase a loading amount of the raw material in the graphitization process. In an optional embodiment, the pre-carbonization temperature is 1100°C to 1200°C.

In some embodiments, the pre-carbonization time is 1 h to 4 h. For example, the pre-carbonization time may be 1 h, 2 h, 3 h, or 4 h, or a value between any two of these values.

The preparation method for the second negative electrode active material in this disclosure includes the following steps:
pretreatment step: crushing and shaping calcined needle coke to obtain a shaped material, where the calcined needle coke has a carbon content of 97% or more, a volatile component content of 2% or less, and a sulfur content of 0.5% or less;
granulation step: mixing the shaped material with a binder to obtain a granulated material; and
graphitization step: subjecting the granulated material to a second graphitization treatment at 3000°C to 3200°C to obtain a second artificial graphite with La(110) of 130 nm to 175 nm and Lc(002) of 30 nm to 42 nm, as a second negative electrode active material.

In this disclosure, calcined needle coke is used as a raw material. The calcined needle coke has a stronger needle-like structure and fewer mosaic structures. Using the calcined needle coke as the raw material helps reduce impurities in the second artificial graphite, thereby improving the graphitization degree of the second artificial graphite.

In this disclosure, the carbon content of the calcined needle coke is 97% or more, the volatile component content is 2% or less, and the sulfur element content is 0.5% or less. Herein, the volatile component refers to low molecular weight hydrocarbons, such as a light alkane. When the sulfur content and volatile component of the calcined needle coke are in the above ranges, the raw material is of relatively high purity, which facilitates grain development in the graphitization process, reduces defects in the graphitization process, improves the graphitization degree of the second artificial graphite and the value of La(110) of the artificial graphite. Since the La(110) of the second artificial graphite is set to 130 nm to 175 nm, and Lc(002) to 30 nm to 42 nm, the graphite grains in the material are well developed, which helps intercalation of active ions, thereby improving the specific capacity and compacted density of the negative electrode film layer, and improving the energy density of the secondary battery.

In this disclosure, the temperature of the graphitization treatment is 3000°C to 3200°C. The graphitization temperature in the above range helps the growth and development of graphite grains, improving the graphitization degree of the second artificial graphite, thereby improving the specific capacity of the second artificial graphite, and improving the energy density of the secondary battery. For example, the graphitization temperature may be 3000°C, 3050°C, 3100°C, 3150°C, or 3200°C, or a value between any two of these values.

In this disclosure, high-purity raw materials are used, and the graphitization temperature is controlled at 3000°C to 3200°C, which helps the development of the 110 crystal plane of graphite grains along the a-axis direction in the graphitization process, thereby improving the value of La(110) of the artificial graphite, and helping reduce defects in the graphitization process, thereby helping improve the energy density of the secondary battery.

Those skilled in the art can adjust the graphitization time as needed. For example, an Acheson graphitization furnace may be used for the graphitization treatment, and when the temperature is above 2800°C, the graphitization time may be 2 days to 8 days.

In some embodiments, a softening point of the binder is 180°C to 270°C. The softening point of the binder refers to a temperature at which the binder changes from a solid state to a softened state with certain fluidity. In this disclosure, the softening point may be tested using instruments and methods known in the art, for example, reference may be made to GB/T 4507-2014 for measurement. When the softening point of the binder is in the above range, a fused ring aromatic in the binder has a large molecular weight and a high content, which helps enhance the bonding property of the binder, reduce the amount of binder in the granulation step, thereby improving the specific capacity and the compacted density of the second artificial graphite. For example, the softening point of the binder may be 180°C, 200°C, 220°C, 240°C, 260°C, or 270°C, or a value between any two of these values.

In some embodiments, a coking value of the binder is 50% to 70%. The coking value of the binder refers to a percentage of a mass of coke residue formed after the binder is heated, burned or otherwise treated under specific experimental conditions to a mass of an original sample. In this disclosure, the coking value may be tested using methods known in the art. For example, reference can be made to GB/T 8727-2008 for measurement. Setting the coking value of the binder to be in the above range helps improve the specific capacity and the compacted density of the second negative electrode active material, thereby improving the energy density of the secondary battery.

In some embodiments, a mass ratio of the shaped material to the binder is 100:(6 to 12). The ratio of the shaped material to the binder being in the above range helps reduce the residual carbon brought by the binder, improving the specific capacity and the compacted density of the second negative electrode active material, thereby improving the energy density of the secondary battery.

In some embodiments, before the graphitization step, pre-carbonizing the granulated material is further included. The pre-carbonization step helps reduce volatile components in the binder, thereby reducing impurities in the second negative electrode active material, improving the specific capacity and the compacted density of the second negative electrode active material, and improving the energy density of the secondary battery.

In some embodiments, the pre-carbonization is performed under a protective atmosphere, for example, the protective atmosphere may be nitrogen or argon. In an optional embodiment, the pre-carbonization is performed under a nitrogen atmosphere.

In some embodiments, the pre-carbonization temperature is 1000°C to 1500°C. For example, the pre-carbonization temperature may be 1000°C, 1100°C, 1200°C, 1300°C, 1400°C, or 1500°C, or a value between any two of these values. When the pre-carbonization temperature is in the above range, the volatile components contained in the raw material can be fully removed, which helps reduce impurities and defects in the second artificial graphite, thereby improving the specific capacity of the second artificial graphite. In addition, the pre-carbonization treatment can increase the density of the raw material, and increase the loading amount of the raw material in the graphitization process. In an optional embodiment, the pre-carbonization temperature is 1000°C to 1100°C.

In some embodiments, the pre-carbonization time is 1 h to 4 h. For example, the pre-carbonization time may be 1 h, 2 h, 3 h, or 4 h, or a value between any two of these values.

In some embodiments, a volume-based distribution particle size Dᵥ50 of an intermediate is 15 µm to 18 µm. The particle size of the intermediate in the above range helps increase the particle size of the second artificial graphite, thereby improving the specific capacity of the second artificial graphite and the energy density of the secondary battery.

In some embodiments, the negative electrode current collector may be a metal foil or a composite current collector. For example, the metal foil may be a copper foil. The composite current collector may include a polymer material base layer and a metal layer formed on at least one surface of a polymer material substrate. The composite current collector may be formed by forming a metal material (copper, copper alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), polyethylene (PE), or the like).

In some embodiments, the first negative electrode active material and optional conductive agent, optional binder, and other optional additives can be dispersed in a solvent (such as deionized water) to form a first slurry. The second negative electrode active material and optional conductive agent, optional binder, and other optional additives can be dispersed in a solvent (such as deionized water) to form a second slurry. The above binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The conductive agent may be selected from at least one of superconducting carbon, acetylene black, carbon black, Ketjen black, carbon dots, carbon nanotubes, graphene, and carbon nanofibers. In some embodiments, the negative electrode film layer may also optionally include other additives, such as a thickener (such as carboxymethyl cellulose sodium (CMC-Na)).

### Positive electrode sheet

The positive electrode sheet includes a positive electrode current collector and a positive electrode film layer disposed on at least one surface of the positive electrode current collector, and the positive electrode film layer includes a positive electrode active material in the first aspect of this disclosure.

As an example, the positive electrode current collector has two opposite surfaces in its thickness direction, and the positive electrode film layer is disposed on either or both of the opposite surfaces of the positive electrode current collector.

In some embodiments, the positive electrode current collector may be a metal foil or a composite current collector. For example, the metal foil may be aluminum foil. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), polyethylene (PE), or the like).

In some embodiments, when the battery cell is a lithium-ion battery, the positive electrode active material may be positive electrode active materials known in the art for lithium-ion batteries. As an example, the positive electrode active material may include at least one of the following materials: a lithium-containing phosphate with an olivine structure, lithium transition metal oxide, and their respective modified compounds. However, this disclosure is not limited to these materials, and other conventional materials that can be used as positive electrode active materials for batteries can also be used. These positive electrode active materials may be used alone or in combination of two or more. An example of the lithium transition metal oxide may include but is not limited to at least one of lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium nickel cobalt aluminum oxide (such as LiNi_{0.85}Co_{0.1}Al_{0.05}O₂) and their modified compounds. An example of the lithium-containing phosphate with an olivine structure may include but is not limited to at least one of lithium iron phosphate (such as LiFePO₄ (also abbreviated as LFP)), composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

During the charge and discharge of the battery, deintercalation and consumption of Li occur, and a molar content of Li varies when the battery is discharged to different states. In the enumeration of positive electrode active materials in this disclosure, the molar content of Li is in the initial state of the material, that is, a state before feeding. When the positive electrode active material is applied to the battery system and undergoes charge-discharge cycles, the molar content of Li changes.

In the enumeration of positive electrode active materials in this disclosure, a molar content of O is only a theoretical state value. Lattice oxygen release causes changes in the molar content of oxygen, and the actual molar content of O fluctuates.

In some embodiments, the positive electrode film layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated propylene acrylate resin.

In some embodiments, the positive electrode film layer may further optionally include a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode sheet may be prepared in the following manner: dispersing the above components for preparing the positive electrode sheet, such as positive electrode active material, conductive agent, binder, and any other components, in a solvent (such as N-methylpyrrolidone) to form a positive electrode slurry; applying the positive electrode slurry to the positive electrode current collector; and performing drying, cold pressing and other processes to obtain the positive electrode sheet.

### Electrolyte

The electrolyte conducts ions between the positive electrode sheet and the negative electrode sheet. This disclosure has no specific limitation on a type of electrolyte, and can be selected according to needs. For example, the electrolyte may be liquid, gel, or all-solid-state.

In some embodiments, the electrolyte may be an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluorooxalatoborate, lithium bis(oxalato)borate, lithium difluorooxalato phosphate, and lithium tetrafluorooxalato phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolytic solution may further optionally include an additive. For example, the additive may include negative electrode film-forming additive and positive electrode film-forming additive, and may further include additives that can improve certain performances of the battery, such as additives that improve the overcharge performance of the battery, additives that improve the high or low temperature performance of the battery, and the like.

### Separator

In some embodiments, the battery cell further includes a separator. This disclosure has no particular limitation on the type of separator, and any known porous structure separator with good chemical stability and mechanical stability can be selected.

In some embodiments, a material of the separator may be selected from at least one of glass fiber, nonwoven fabric, polyethylene, polypropylene, and polyvinylidene fluoride. The separator may be a single-layer film or a multi-layer composite film. This is not particularly limited. When the separator is a multi-layer composite film, the materials of the layers may be the same or different. This is not particularly limited.

In some embodiments, the positive electrode sheet, the negative electrode sheet, and the separator may be made into an electrode assembly through winding or stacking.

In some embodiments, the battery cell may include an outer package. The outer package may be used to encapsulate the above electrode assembly and electrolyte.

In some embodiments, the outer package of the battery cell may be a hard shell, such as a hard plastic shell, aluminum shell, or steel shell. The outer package of the battery cell may alternatively be a soft package, such as a soft pouch package. A material of the soft package may be plastic. An example of the plastic includes polypropylene, polybutylene terephthalate, and polybutylene succinate.

This disclosure has no particular limitation on a shape of the battery cell, which may be cylindrical, prismatic, or any other shape. For example, FIG. 2 is a battery cell 5 with a prismatic structure as an example.

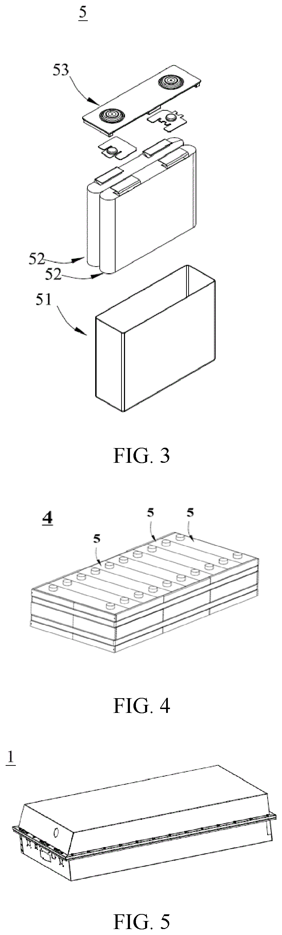

In some embodiments, with reference to FIG. 3, the outer package may include a case 51 and a top cover assembly 53. The case 51 may include a bottom plate and a side plate connected to the bottom plate, and the bottom plate and the side plate enclose to form an accommodating cavity. The case 51 has an opening communicating with the accommodating cavity, and the top cover assembly 53 can cover the opening to close the accommodating cavity. The positive electrode sheet, the negative electrode sheet, and the separator can form an electrode assembly 52 through winding or stacking. The electrode assembly 52 is encapsulated in the accommodating cavity. The electrolyte infiltrates into the electrode assembly 52. One or more electrode assemblies 52 may be contained in the battery cell 5, which can be determined by those skilled in the art according to specific actual needs.

In some embodiments, the battery cells may be assembled into a battery module, and one or more battery cells may be contained in the battery module. A specific quantity can be determined by those skilled in the art according to the application and capacity of the battery module.

FIG. 4 is a battery module 4 as an example. With reference to FIG. 4, in the battery module 4, a plurality of battery cells 5 may be arranged in sequence along a length direction of the battery module 4. Certainly, they can also be arranged in any other manner. Further, the plurality of battery cells 5 may be fixed by fasteners.

Optionally, the battery module 4 may further include a housing with an accommodating space, and the plurality of battery cells 5 are accommodated in the accommodating space.

In some embodiments, the above battery module can also be assembled into a battery pack, and one or more battery modules may be contained in the battery pack. A specific quantity can be determined by those skilled in the art according to the application and capacity of the battery pack.

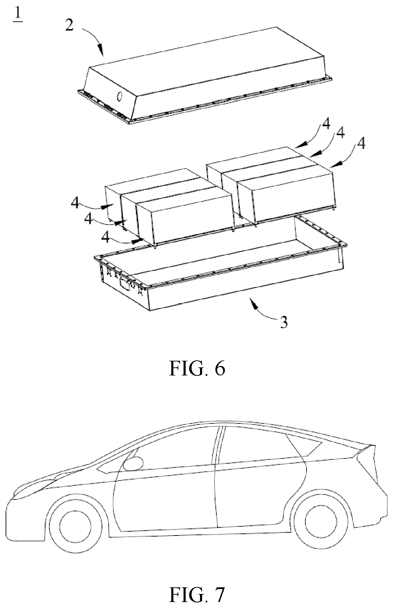

FIG. 5 and FIG. 6 are a battery pack 1 as an example. With reference to FIG. 5 and FIG. 6, the battery pack 1 may include a battery box and a plurality of battery modules 4 disposed in the battery box. The battery box includes an upper case 2 and a lower case 3, where the upper case 2 may cover the lower case 3 and form a closed space for accommodating the battery modules 4. The plurality of battery modules 4 may be arranged in the battery box in any manner.

In addition, this disclosure further provides an electric device. The electric device includes the secondary battery provided by this disclosure. The secondary battery may be used as a power source of the electric device or as an energy storage unit of the electric device. The electric device may include mobile devices (such as mobile phones and notebook computers), electric vehicles (such as pure electric vehicles, hybrid electric vehicles, plug-in hybrid electric vehicles, electric bicycles, electric scooters, electric golf carts, and electric trucks), electric trains, ships, satellites, energy storage systems, and the like, but is not limited thereto.

As the electric device, a battery cell, battery module, or battery pack may be selected according to its usage needs.

FIG. 7 is an exemplary electric device. The electric device is a pure electric vehicle, hybrid electric vehicle, plug-in hybrid electric vehicle, or the like. To satisfy high power and high energy density requirements for the electric device of the secondary battery, a battery pack or battery module may be used.

Another example of the device may be a mobile phone, tablet computer, notebook computer, or the like. Such devices are usually light and thin, and a battery cell may be used as the power source.

### Examples

Hereinafter, examples of this disclosure are described. The examples described below are illustrative and are only used to explain this disclosure, and should not be understood as limitations to this disclosure. For specific technologies or conditions not specified in the examples, they are carried out according to the technologies or conditions described in the literature in the art or according to the product instructions. Reagents or instruments used without specifying the manufacturer are all conventional products that are commercially available.

### Preparation of first negative electrode active material

### Material 1-1

Step 1: Petroleum coke (a sulfur element content of 0.6% and a volatile component content of 12%) was crushed and shaped to obtain a shaped material with primary particles having a volume-based distribution particle size Dᵥ50 of 12.8 µm.

Step 2: The above shaped material was subjected to pre-carbonization treatment at 1150°C in a roller kiln device to obtain an intermediate.

Step 3: The above intermediate was subjected to graphitization at 2450°C to obtain material 1-1, as the first negative electrode active material.

### Materials 1-2 to 1-5 and materials 1-1' and 1-2'

The preparation methods of materials 1-2 to 1-5 and materials 1-1' and 1-2' were similar to that of material 1-1, and the difference was that the raw material type, the shaped material particle size Dᵥ50, and the graphitization temperature in the preparation method were adjusted according to the parameters shown in Table 1.

For the above materials, the test was performed according to the following methods, and the results were shown in Table 1.

### Test of graphitization degree of material:

With reference to the test method in JIS K 0131-1996, Bruker D8 Discover X-ray diffractometer was used for the test, where a copper target was used as an anode target and CuKα ray as a radiation source, a ray wavelength λ was 1.5418 Å, 2θ scanning range was 20° to 80°, and a scanning rate was 4°/min, to obtain an average interlayer spacing d002 of a C(002) crystal plane in a crystal structure of a material, and then a graphitization degree was calculated according to the formula g=(0.344-d002)/(0.344-0.3354)×100%. In the above formula, d002 was the average interlayer spacing of the C(002) crystal plane in the crystal structure of the material, measured in nanometers (nm).

### Test of powder OI value of material

With reference to the test method in JIS K 0131-1996, Bruker D8 Discover X-ray diffractometer was used for the test, where a copper target was used as an anode target and CuKα ray as the radiation source, a ray wavelength λ was 1.5418 Å, a 2θ scanning range was 20° to 80°, and a scanning rate was 4°/min, to obtain an X-ray diffraction pattern of a powder sample. According to the X-ray diffraction pattern, I₀₀₄ and I₁₁₀ were calculated, where I₀₀₄ was an integrated area of a diffraction peak of a 004 crystal plane of crystalline carbon in the powder sample, and I₁₁₀ was an integrated area of a diffraction peak of a 110 crystal plane of crystalline carbon in the powder sample. A powder OI value of the sample was calculated according to OI value=I₀₀₄/I₁₁₀.

### Test of specific capacity of material

The above prepared sample powder was mixed with a conductive agent carbon black (Super P) and a binder polyvinylidene fluoride (PVDF) in a mass ratio of 91.6:1.8:6.6 with a solvent N-methylpyrrolidone (NMP) uniformly to form a slurry; the prepared slurry was applied to a surface of the negative electrode current collector copper foil, and dried in an oven; and ethylene carbonate (EC), ethyl methyl carbonate (EMC), and diethyl carbonate (DEC) were mixed in a volume ratio of 1:1:1 to obtain an organic solvent, and then LiPF₆ was dissolved in the above organic solvent to prepare an electrolyte with a concentration of 1 mol/L. A metal lithium sheet was used as a counter electrode and a 12-µm polyethylene (PE) film as a separator, to assemble a CR2430 button cell with the above prepared electrolyte in an argon-protected glove box.

After the obtained button cell was left standing for 12 h, at 25°C, the above prepared button cell was first discharged at a constant current of 0.15 mA to 0.005 V; left standing for 10 minutes and then discharged at a constant current of 50 µA to 0.005 V; and left standing for 10 minutes and then discharged at a constant current of 10 µA to 0.005 V, where a first-circle discharge capacity of the button cell was recorded. Then the cell was charged at a constant current of 0.3 mA to 2.0 V, where the first-circle charge capacity of the button cell was recorded. A ratio of the first-circle charge capacity to a material mass was a specific capacity of the material.

### Test of volume-based distribution particle size of material

Dᵥ50 test: With reference to GB/T 19077-2016 "Particle size analysis-Laser diffraction methods", Mastersizer 3000 laser particle size analyzer from Malvern Instruments (Malvern, UK) was used for the test.

### Test of powder compacted density of material

A certain amount of powder was placed in a dedicated compaction mold, then the mold was placed on a compacted density instrument, with a pressure to 50000 N. A thickness (thickness after pressure release) of the powder was read under this pressure on the device, and a compacted density was calculated according to ρ=m/v.

### Test of I_{D}/I_{G} value

Horiba LabRAM HR800 Raman spectrometer was used for the test. The test conditions were as follows: an excitation wavelength of 532 nm, grating of 600 lines, objective of 50 times, an integration time of 10s, cumulative times of 3, surface scan, to obtain D peak and G peak intensities of 100 points. I_{D}/I_{G} of the 100 points were calculated, the maximum 30 I_{D}/I_{G} values and minimum 30 I_{D}/I_{G} values were removed, and an average of the remaining 40 points was the I_{D}/I_{G} of the material.

**Table 1**

| | Raw material | | | Shaped material particle size Dᵥ50 (µm) | Graphitization temperature (°C) | First artificial graphite | | | | |
|---|---|---|---|---|---|---|---|---|---|---|
| Material number | Raw material type | Sulfur element content | Volatile component content | | | Graphitization degree | Powder OI value | I_{D}/I_{G} value | Specific capacity (mAh/g) | Powder compacted density (g/cc) |
| 1-1 | Petroleum coke | 0.6% | 12% | 12.8 | 2450 | 91.0% | 3.2 | 0.17 | 335 | 1.65 |
| 1-2 | Petroleum coke | 0.6% | 12% | 12.7 | 2630 | 92.3% | 3.8 | 0.08 | 343 | 1.71 |
| 1-3 | Petroleum coke | 0.6% | 12% | 12.5 | 2800 | 93.5% | 4.6 | 0.10 | 350 | 1.83 |
| 1-4 | Petroleum coke | 0.6% | 12% | 10.2 | 2650 | 92.3% | 3 | 0.14 | 345 | 1.68 |
| 1-5 | Petroleum coke | 0.6% | 12% | 13.8 | 2600 | 92.3% | 6 | 0.15 | 345 | 1.81 |
| 1-1' | Petroleum coke | 0.6% | 12% | 12.8 | 2200 | 88.7% | 3.5 | 0.20 | 300 | 1.58 |
| 1-2' | Needle coke | 0.5% | 10% | 12.5 | 2250 | 90.1% | 6.8 | 0.15 | 332.1 | 1.67 |

### Preparation of second negative electrode active material

### Material 2-1

Step 1: A calcined needle coke raw material (a carbon content of 98.5%, a volatile component content of 1.0%, and a sulfur element content of 0.5%) was crushed and shaped by mechanical grinding to obtain a shaped material with Dᵥ50 of 11 µm.

Step 2: Granulation pitch with a softening point of 200°C was used as a first binder to granulate the above shaped material through a granulation kettle to obtain a granulated material, where a mass ratio of the shaped material to the first binder is 100:8.

Step 3: The above granulated material was subjected to pre-carbonization at 1150°C for 2 hours under a nitrogen atmosphere to obtain an intermediate.

Step 4: The above intermediate was subjected to graphitization at a high temperature of 3020°C, and the graphitized particles were sieved and demagnetized to obtain a first carbon material with La(110) of 131.7 nm and Lc(002) of 32.5 nm, as the first negative electrode active material 1-1.

### Materials 2-2 to 2-4 and materials 2-1' to 2-2'

The preparation methods of materials 2-2 to 1-4 and materials 2-1' and 2-2' were similar to that of material 2-1, and the difference was that the raw material type and graphitization temperature were adjusted so that the La(110), Lc(002), La/Lc, powder OI value, specific capacity, powder compacted density, and Dᵥ50 of materials 2-2 to 2-4 and materials 2-1' and 2-2' were the values shown in Table 2.

For the above materials, parameters such as the powder OI value, specific capacity, powder compacted density, and Dᵥ50 of the materials were tested with reference to the methods in the preparation of the first negative electrode active material above, and the results were shown in Table 2.

In addition, for the above materials, the test was performed according to the following methods, and the results were shown in Table 2.

### Test of La(110), Lc(002), and La/Lc of material

With reference to the test method in JIS K 0131-1996, Bruker D8 Discover X-ray diffractometer was used for test, and a copper target was used as an anode target and CuKα ray as a radiation source, where a ray wavelength λ was 1.5418 Å, a 2θ scanning range was 20°to 80°, and a scanning rate was 4°/min, to obtain a peak intensity and full width at half maximum (FWHM) of a diffraction peak corresponding to a (110) crystal plane of the material, and a peak intensity and full width at half maximum (FWHM) of a diffraction peak corresponding to a (002) crystal plane. La and Lc were calculated according to the following formulas:
La calculation formula: ${L}_{a} = \frac{K ∗ λ}{{β}_{110} ∗ {cosθ}_{110}}$, where
K was the shape factor, taken as 1.84; λ was the wavelength (nm); β110 was the full width at half maximum of the 110 crystal plane corresponding to ~43° in the X-ray diffraction pattern; and θ110 was the diffraction angle corresponding to the 110 crystal plane in the X-ray diffraction pattern; and
Lc calculation formula: ${L}_{c} = \frac{K ∗ λ}{{β}_{002} ∗ {cosθ}_{002}}$, where
K was the shape factor, taken as 0.89; λ was the wavelength (nm); β002 was the full width at half maximum of the 002 crystal plane corresponding to ~26° in the X-ray diffraction pattern; and θ002 was the diffraction angle corresponding to the 002 crystal plane in the X-ray diffraction pattern.

### A proportion X of lithiation capacity of plateau to overall lithiation capacity

Sample powder with a conductive agent carbon black (Super P) and a binder polyvinylidene fluoride (PVDF) were mixed in a mass ratio of 91.6:1.8:6.6 with solvent N-methylpyrrolidone (NMP) uniformly to form a slurry; the prepared slurry was applied to a surface of a negative electrode current collector copper foil and dried in an oven; ethylene carbonate (EC), ethyl methyl carbonate (EMC), and diethyl carbonate (DEC) were mixed in a volume ratio of 1:1:1 to obtain an organic solvent, and then LiPF₆ was dissolved in the above organic solvent to prepare an electrolyte with a concentration of 1 mol/L. A metal lithium sheet was used as a counter electrode and a polyethylene (PE) film as a separator, to assemble a CR2430 button cell with the above electrolyte in an argon-protected glove box. After the obtained button cell was left standing for 12 h, at 25°C, the cell was first discharged at a constant current of 0.15 mA to 0.005 V; left standing for 10 minutes and then discharged at a constant current of 50 µA to 0.005 V; left standing for 10 minutes and then discharged at a constant current of 10 µA to 0.005 V; and then charged at a constant current of 0.3 mA to 2.0 V to obtain a relationship between a charge-discharge capacity and a voltage of the material, that is, a charge-discharge curve. A lithiation capacity of the lithiation plateau in 0.005 V to 0.070 V in the discharge curve was recorded as C1, a total lithiation capacity in the range of 0.005 V to 2.0 V was recorded as C2, and a proportion X of the lithiation capacity of the plateau was equal to C1/C2*100%.

**Table 2**

| Material number | Raw material | | | | Graphitization temperature (°C) | Second artificial graphite | | | | | |
|---|---|---|---|---|---|---|---|---|---|---|---|
| | Type | Volatile component content | Sulfur element content | Carbon content | | La(110) (nm) | Lc(002) (nm) | La/L c | X value | Specific capacity (mAh/g) | Powder compacted density (g/cc) |
| 2-1 | Calcined needle coke | 1% | 0.5% | 98.5% | 3020 | 131.7 | 32.5 | 4.05 | 44.10 % | 360.4 | 1.97 |
| 2-2 | Calcined needle coke | 0.8% | 0.5% | 98.7% | 3100 | 155 | 33.9 | 4.57 | 44.4% | 361.1 | 1.99 |
| 2-3 | Calcined needle coke | 0.5% | 0.5% | 99.0% | 3200 | 165.0 | 31 | 5.32 | 45.2% | 363.0 | 2.02 |
| 2-4 | Calcined needle coke | 0.8% | 0.5% | 98.7% | 3150 | 156 | 30 | 5.2 | 44.8% | 362.3 | 2.01 |
| 2-5 | Calcined needle coke | 1.0% | 0.5% | 98.5% | 3050 | 151.2 | 42 | 3.6 | 43.8% | 359.8 | 1.95 |

### Example 1

### (1) Preparation of first negative electrode active material slurry

The above first negative electrode active material, conductive agent Super P, thickener carboxymethyl cellulose sodium, and binder styrene-butadiene rubber were fully stirred and mixed in a weight ratio of 96.6: 0.80:1.0:1.6 in an appropriate amount of solvent deionized water to form a first negative electrode active material slurry.

### (2) Preparation of second negative electrode active material slurry

The above second negative electrode active material, conductive agent Super P, thickener carboxymethyl cellulose sodium, and binder styrene-butadiene rubber were fully stirred and mixed in a weight ratio of 96.6: 0.80:1.0:1.6 in an appropriate amount of solvent deionized water to form a second negative electrode active material slurry.

### (3) Preparation of negative electrode sheet

A dual-cavity coating device simultaneously extruded the first negative electrode active material slurry and the second negative electrode active material slurry, where a mass ratio of the first negative electrode active material slurry to the second negative electrode active material slurry was 1:1. The second negative electrode active material slurry was applied to the negative electrode current collector copper foil, that is, the second negative electrode active material slurry was applied to a lower region, and the first negative electrode active material slurry was applied to the second negative electrode active material slurry, that is, the first negative electrode active material slurry was applied to the upper region. After drying and cold pressing, the negative electrode sheet was obtained.

### (4) Preparation of positive electrode sheet

Lithium iron phosphate, conductive carbon black, and PVDF were mixed in a mass ratio of 96.5:1.7:1.8 in a solvent N-methylpyrrolidone, and was stirred uniformly to obtain a positive electrode slurry. The positive electrode slurry was applied to both surfaces of a positive electrode current collector aluminum foil. After drying and cold pressing, the positive electrode sheet was obtained.

### (5) Preparation of lithium-ion battery

A polyethylene film was used as a separator. A PVDF slurry was sprayed to both sides of the separator, and a 1-µm ceramic coating was formed on one side through spraying, with the ceramic coating facing a cathode sheet.

Ethylene carbonate (EC), ethyl methyl carbonate (EMC), and diethyl carbonate (DEC) were mixed in a volume ratio of 1:1:1 to obtain an organic solvent, and then LiPF₆ was dissolved in the above organic solvent to prepare an electrolyte with a concentration of 1 mol/L.

The above prepared positive electrode sheet and negative electrode sheet were placed in order, with the separator placed between the positive electrode sheet and negative electrode sheet for separation; and then wound to obtain an electrode assembly. The electrode assembly was placed in an outer package, and the electrolyte was injected after drying. After vacuum packaging, standing, formation, shaping, and other processes, the secondary battery was obtained.

### Example 2

The battery preparation method of Example 2 was similar to that of Example 1, and the difference was that in the step of the negative electrode sheet preparation, the types of the first negative electrode active material and the second negative electrode active material were adjusted as shown in Table 3.

### Comparative example 1

The battery preparation method of Comparative example 1 was similar to that of Example 1, and the difference was that in the step of negative electrode sheet preparation, the first negative electrode active material slurry was applied to the lower region, and the second negative electrode active material slurry was applied to the upper region.

### Comparative example 2

The battery preparation method of Comparative example 2 was similar to that of Example 1, and the difference was that in the step of negative electrode sheet preparation, the first negative electrode active material 1-1 and the negative electrode active material 2-1 were mixed uniformly, and then a negative electrode slurry was prepared to form one negative electrode film layer on the negative electrode current collector.

### Comparative example 3

The battery preparation method of Comparative example 3 was similar to that of Example 1, and the difference was that in the step of the negative electrode sheet preparation, only the first negative electrode active material 1-1 was used to form one negative electrode film layer on the negative electrode current collector.

### Comparative examples 4 and 5

The battery preparation methods of Comparative examples 4 and 5 were similar to that of Example 1, and the difference was that in the step of the negative electrode sheet preparation, the types of the first negative electrode active material and the second negative electrode active material were adjusted as shown in Table 3.

### Performance test

### (1) Specific capacity of negative electrode sheet

A button cell was assembled with a negative electrode sheet and a lithium sheet. After the obtained button cell was left standing for 12 h, at 25°C, the cell was discharged at a constant current of 0.05C to 0.005 V; left standing for 10 minutes and then discharged at a constant current of 50 µA to 0.005 V; and left standing for 10 minutes and then discharged at a constant current of 10 µA to 0.005 V. An obtained capacity was a lithiation specific capacity of the negative electrode sheet. Then the cell was charged at a constant current of 0.1C to 2 V, and an obtained capacity was a delithiation specific capacity of the negative electrode sheet.

### (2) Compacted density of negative electrode sheet

An electrode sheet was cut into a small disc with a diameter of 13 mm. A mass and a thickness of the small disc were measured with a balance and a micrometer. A compacted density of the electrode was calculated according to the formula P.D. (compacted density)=m (mass)/V (volume).

### (3) Energy density

At 25°C, the secondary battery was charged at a constant current of 1/3C to 3.65 V, then charged at a constant voltage of 3.65 V until a current of 0.05C, left standing for 5 min, and then discharged at a constant current of 1/3C to 2.5 V. Current discharge energy of the battery was recorded. The battery discharge energy was divided by a weight of the battery to obtain a weight energy density of the battery, measured in Wh/kg.

### (4) Test of cycling performance of secondary battery

At 45°C, the secondary battery was charged at a constant current of 1C to an upper limit of 3.65 V (corresponding to 100% SOC), and then charged at a constant voltage to a current of 0.05C. After the battery was left standing for 5 min, the secondary battery was discharged at a constant current of 1C to 2.5 V (corresponding to 0% SOC). A current discharge capacity was recorded as a first-circle discharge capacity. The secondary battery was subjected to cyclic charge-discharge test according to the above method, and a discharge capacity at each cycle was recorded. 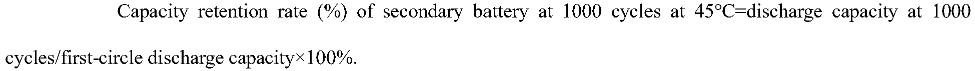 Capacity retention rate (%) of secondary battery at 1000 cycles at 45°C=discharge capacity at 1000 cycles/first-circle discharge capacity×100%.

The secondary batteries prepared in the above examples and comparative examples were subjected to performance test, and the results were shown in Table 3.

**Table 3**

| Number | First region | Second region | Mass ratio of first negative electrode material to second negative electrode material | Negative electrode sheet | | Secondary battery | |
|---|---|---|---|---|---|---|---|
| | First negative electrode material | Second negative electrode material | | Specific capacity (mAh/g) | Compacted density (g/cc) | Energy density (Wh/kg) | 45°C cycling performance @ 1000 cycles |
| Example 1 | 1-1 | 2-1 | 5:5 | 347.8 | 1.55 | 155 | 92.1% |
| Example 2 | 1-2 | 2-1 | 5:5 | 351.8 | 1.60 | 165 | 91.5% |
| Comparative example 1 | 2-1 | 1-1 | 5:5 | 347.8 | 1.55 | 155 | 85.5% |
| Comparative example 2 | Single-layer film: materials 2-1 and 1-1 are physically mixed | | 5:5 | 347.8 | 1.50 | 151 | 86.3% |
| Comparative example 3 | Single-layer film: only material 1-1 is included | | / | 335 | 1.40 | 145 | 92.8% |
| Comparative example 4 | 1-1' | 2-1 | 5:5 | 330.3 | 1.45 | 145.2 | 87.4% |
| Comparative example 5 | 1-2' | 2-1 | 5:5 | 346.2 | 1.48 | 149.8 | 87.2% |

From the data in Table 3, it can be learned that compared with Comparative examples 1 and 2, in the secondary batteries prepared in Examples 1 and 2 of this disclosure, the negative electrode sheet includes two layers, where the first region is provided with the first negative electrode active material with a relatively low graphitization degree and high isotropy, and the second region is provided with the second negative electrode active material with a high energy density, which improves cycling performance of the secondary battery while ensuring the energy density. The secondary battery in Comparative example 3 is provided with a negative electrode sheet prepared from the first negative electrode active material, which has good cycling performance but a low energy density. In comparison, in Examples 1 and 2 of this disclosure, a double-layer design can improve the cycling performance of the secondary battery while improving the energy density.

### Examples 3 to 12

The battery preparation methods of Examples 3 to 12 were similar to that of Example 1, and the differences were that the types of the first negative electrode active material and the second negative electrode active material were different, and the mass ratio was different.

The secondary batteries prepared in the above examples were subjected to performance test, and the results were shown in Table 4.

**Table 4**

| Number | First region | Second region | Mass ratio of first negative electrode material to second negative electrode material | Negative electrode sheet | | Secondary battery | |
|---|---|---|---|---|---|---|---|
| | First negative electrode material | Second negative electrode material | | Specific capacity (mAh/g) | Compacted density (g/cc) | Energy density (Wh/kg) | 45°C cycling performance @ 1000 cycles |
| Example 3 | 1-3 | 2-1 | 5:5 | 355.7 | 1.68 | 183 | 90.5% |
| Example 4 | 1-4 | 2-1 | 5:5 | 352.8 | 1.65 | 169 | 91.1% |
| Example 5 | 1-5 | 2-1 | 5:5 | 353.0 | 1.68 | 173 | 90.9% |
| Example 6 | 1-1 | 2-1 | 3:7 | 353.0 | 1.62 | 168 | 91.0% |
| Example 7 | 1-1 | 2-1 | 5:5 | 347.8 | 1.55 | 155 | 92.1% |
| Example 8 | 1-1 | 2-1 | 6:4 | 345.3 | 1.53 | 152 | 92.5% |
| Example 9 | 1-1 | 2-2 | 5:5 | 348.0 | 1.63 | 163 | 91.4% |
| Example 10 | 1-1 | 2-3 | 5:5 | 349.3 | 1.65 | 167 | 91.2% |
| Example 11 | 1-1 | 2-4 | 5:5 | 348.7 | 1.64 | 165 | 91.2% |
| Example 12 | 1-1 | 2-5 | 5:5 | 347.4 | 1.58 | 159 | 92.6% |

From the data in Table 4, it can be learned that cycling performance of the secondary batteries prepared in the examples of this disclosure is improved while ensuring the energy density.

It should be noted that this disclosure is not limited to the above embodiments. The above embodiments are only examples, and embodiments having substantially the same configuration as the technical idea within the scope of the technical solution of this disclosure and exerting the same effects are included in the technical scope of this disclosure. In addition, various modifications that can be conceived by those skilled in the art within the scope not departing from the gist of this disclosure, and other forms constructed by combining some constituent elements of the embodiments are also included in the scope of this disclosure.

## Claims

1. A secondary battery, comprising a negative electrode sheet, wherein the negative electrode sheet comprises a negative electrode current collector and a negative electrode film layer on at least one surface of the negative electrode current collector, the negative electrode film layer is provided with a first surface away from the negative electrode current collector and a second surface disposed opposite to the first surface, a thickness of the negative electrode film layer is denoted as H, a region within a thickness range from the first surface of the negative electrode film layer to 0.3H is denoted as a first region of the negative electrode film layer, a region within a thickness range from the second surface of the negative electrode film layer to 0.3H is denoted as a second region of the negative electrode film layer, the first region comprises a first negative electrode active material, and the second region comprises a second negative electrode active material;
the first negative electrode active material comprises primary particles of first artificial graphite, a powder OI value of the first negative electrode active material is 3 to 6, and a graphitization degree is 91% to 93.5%; and
a specific capacity of the second negative electrode active material is greater than a specific capacity of the first negative electrode active material.

2. The secondary battery according to claim 1, wherein the powder OI value of the first negative electrode active material is 3 to 3.8, and/or the graphitization degree is 91.0% to 92.5%.

3. The secondary battery according to claim 1 or 2, wherein an I_{D}/I_{G} value of the first negative electrode active material is 0.08 to 0.17;
wherein I_{D} represents a D peak intensity at 1350±50 cm⁻¹ in a Raman spectrum of a material, I_{G} represents a G peak intensity at 1580±50 cm⁻¹ in a Raman spectrum of a material, and the I_{D}/I_{G} value represents a ratio of the D peak intensity to the G peak intensity.

4. The secondary battery according to claim 3, wherein the I_{D}/I_{G} value of the first negative electrode active material is 0.1 to 0.15.

5. The secondary battery according to any one of claims 1 to 4, wherein the specific capacity of the second negative electrode active material is 359.0 mAh/g or more.

6. The secondary battery according to any one of claims 1 to 5, wherein
the specific capacity of the first negative electrode active material is 335 mAh/g to 350 mAh/g.

7. The secondary battery according to claim 6, wherein
the specific capacity of the first negative electrode active material is 335 mAh/g to 345 mAh/g; and/or
the specific capacity of the second negative electrode active material is 360 mAh/g to 366 mAh/g.

8. The secondary battery according to any one of claims 1 to 7, wherein a powder compacted density of the first negative electrode active material under 50000 N is less than a powder compacted density of the second negative electrode active material under 50000 N.

9. The secondary battery according to any one of claims 1 to 8, wherein
the powder compacted density of the first negative electrode active material under 50000 N is 1.65 g/cc to 1.83 g/cc; and/or
the powder compacted density of the second negative electrode active material under 50000 N pressure is 1.95 g/cc to 2.04 g/cc.

10. The secondary battery according to claim 9, wherein
the powder compacted density of the first negative electrode active material under 50000 N is 1.65 g/cc to 1.71 g/cc; and/or
the powder compacted density of the second negative electrode active material under 50000 N pressure is 1.96 g/cc to 2.02 g/cc.

11. The secondary battery according to any one of claims 1 to 10, wherein the graphitization degree of the first negative electrode active material is less than a graphitization degree of the second negative electrode active material.

12. The secondary battery according to any one of claims 1 to 11, wherein
the graphitization degree of the second negative electrode active material is 94.0% to 96.0%.

13. The secondary battery according to claim 12, wherein
the graphitization degree of the second negative electrode active material is 94.2% to 95.8%.

14. The secondary battery according to any one of claims 1 to 13, wherein
a volume-based distribution particle size Dᵥ50 of the first negative electrode active material is 9.0 µm to 13.5 µm; and/or
a volume-based distribution particle size Dᵥ50 of the second negative electrode active material is 14.5 µm to 18.0 µm.

15. The secondary battery according to claim 14, wherein
the volume-based distribution particle size Dᵥ50 of the first negative electrode active material is 12.5 µm to 13.5 µm; and/or
the volume-based distribution particle size Dᵥ50 of the second negative electrode active material is 15.0 µm to 17.5 µm.

16. The secondary battery according to any one of claims 1 to 14, wherein a specific surface area of the first negative electrode active material is less than or equal to a specific surface area of the second negative electrode active material.

17. The secondary battery according to any one of claims 1 to 16, wherein
the specific surface area of the first negative electrode active material is 0.8 m²/g to 1.8 m²/g; and/or
the specific surface area of the second negative electrode active material is 0.8 m²/g to 2.1 m²/g.

18. The secondary battery according to any one of claims 1 to 17, wherein the secondary battery satisfies one or more of the following conditions:
a specific capacity of the negative electrode sheet is 348.0 mAh/g to 355.0 mAh/g;
a powder compacted density of the negative electrode film layer under 50000 N pressure is 1.60 g/cc to 1.70 g/cc;
an areal density of the negative electrode film layer is 10.0 mg/cm² to 20.0 mg/cm²; and
a thickness of the negative electrode film layer is 70 µm to 250 µm.

19. The secondary battery according to any one of claims 1 to 18, wherein in the negative electrode film layer, a mass ratio of the first negative electrode active material to the second negative electrode active material is 3:7 to 6:4.

20. The secondary battery according to any one of claims 1 to 19, wherein the second negative electrode active material comprises second artificial graphite, La(110) of the second artificial graphite is 130 nm to 175 nm, and Lc(002) is 30 nm to 42 nm; and
La(110) represents a crystallite size along an a-axis in a (110) crystal plane of a material, and Lc(002) represents a crystallite size along a c-axis in a (002) crystal plane of a material.

21. The secondary battery according to claim 20, wherein the La(110) of the second artificial graphite is 132 nm to 172 nm, and Lc(002) is 30 nm to 36 nm.

22. The secondary battery according to claim 20 or 21, wherein La(110)/Lc(002) is 3.5 to 5.5.

23. The secondary battery according to any one of claims 1 to 22, wherein under conditions of delithiation rate of 0.1C and lithiation rate of 0.05C, a button cell prepared from the second artificial graphite is subjected to a charge-discharge test to obtain a charge-discharge curve in a range of 0.005 V to 2.0 V; and a discharge curve exhibits a lithiation plateau in a voltage range of 0.005 V to 0.070 V, and a proportion X of a discharge capacity corresponding to the lithiation plateau to a total discharge capacity of the button cell is 43% or more.

24. The secondary battery according to claim 23, wherein the proportion X of the discharge capacity corresponding to the lithiation plateau to the total discharge capacity of the button cell is 43% to 47%.

25. The secondary battery according to any one of claims 1 to 24, wherein the second artificial graphite comprises secondary particles.

26. The secondary battery according to any one of claims 1 to 25, wherein a particle size distribution (Dᵥ90-Dᵥ10)/Dᵥ50 of the second negative electrode active material is 0.9 to 1.25.

27. An electric device, comprising the secondary battery according to any one of claims 1 to 26.
